# EUROPÄISCHE PATENTANMELDUNG

(11) **EP 1 422 468 A2**
(43) Veröffentlichungstag der Anmeldung: **26.05.2004**
(21) Anmeldenummer: 03022811.8
(22) Anmeldetag: 07.10.2003
(51) Int. Cl.: F21L 4/02, F21V 5/04, F21Y 101/02

(54) **Mobile Leuchte mit Leuchtdioden**

(30) Priorität: 22.11.2002 DE 10254634
(71) Anmelder: Mellert SLT GmbH & Co. KG, 75015 Bretten (DE)
(72) Erfinder: Twardawski, Harald, 76437 Rastatt (DE)
(74) Vertreter: Manitz, Finsterwald & Partner GbR

(57) **Zusammenfassung**

Eine mobile Leuchte umfasst eine erste Leuchteinheit zur Abstrahlung eines ersten Lichtbündels in einer ersten Abstrahlrichtung, die zur Bildung des ersten Lichtbündels wenigstens ein erstes Leuchtdiodenelement (30) und eine dem ersten Leuchtdiodenelement (30) zugeordnete abbildende Einrichtung (42), der von dem ersten Leuchtdiodenelement (3) abgegebenes Licht zuführbar ist, aufweist, und eine zweite Leuchteinheit zur Abstrahlung eines zweiten Lichtbündels in einer zweiten, von der ersten Abstrahlrichtung abweichenden Abstrahlrichtung, die zur Bildung des zweiten Lichtbündels wenigstens ein zweites Leuchtdiodenelement (34) und eine dem zweiten Leuchtdiodenelement (34) zugeordnete abbildende Einrichtung (44), der von dem zweiten Leuchtdiodenelement (34) abgegebenes Licht zuführbar ist, aufweist.

## Beschreibung

Die vorliegende Erfindung betrifft eine mobile Leuchte.

Mobile Leuchten sind grundsätzlich bekannt. Hierunter werden insbesondere Leuchten verstanden, die transportabel und während ihres Einsatzes ohne einen Anschluss an ein Festnetz betreibbar sind. Beispiele für solche mobile Leuchten sind zum Beispiel Taschenleuchten bzw. -lampen, Stirnleuchten bzw. -lampen oder auch Leuchten für Fahrzeuge.

Für viele Einsatzzwecke ist es wünschenswert, mit einer solchen mobilen Leuchte verschiedene Raumbereiche ausleuchten zu können. Dazu ist es beispielsweise bei einer konventionellen Stirn- oder Taschenleuchte mit einer Glüh- oder Halogenbirne als Leuchtmittel notwendig, die Stirn- oder Taschenleuchte in eine entsprechende Raumrichtung zu schwenken. Um die Ausleuchtung einer gegebenen Fläche zu verbessern, kann dann noch das von der Glüh- oder Halogenbirne abgegebene Licht entsprechend fokussiert werden, wozu beispielsweise ein relativ zu der Glüh- oder Halogenbirne verschiebbarer, die Glüh- oder Halogenbirne umgebender Reflektor mit fokussierenden Eigenschaften verwendet werden kann.

Solche mobilen Leuchten weisen jedoch eine Reihe von Nachteilen auf. Zum einen verbrauchen Glüh- oder Halogenbirnen sehr viel Strom, so dass entweder eine große und schwere Stromversorgung, beispielsweise durch Batterien, notwendig ist oder die Leuchte eine nur kurze Betriebszeit aufweist. Zum anderen erfordert eine verstellbare Fokussierung des abgegebenen Lichts eine vergleichsweise aufwändige bewegliche Führung des Reflektors. Darüber hinaus muss die Leuchte geschwenkt werden, was insbesondere bei Stirnleuchten unvorteilhaft sein kann.

Der vorliegenden Erfindung liegt daher die Aufgabe zugrunde, eine mobile Leuchte bereitzustellen, mittels derer einfach verschiedene Raumbereiche beleuchtbar sind.

Die Aufgabe wird gelöst durch eine mobile Leuchte mit den Merkmalen gemäß dem Anspruch 1.

Die erfindungsgemäße mobile Leuchte umfasst eine erste Leuchteinheit zur Abstrahlung eines ersten Lichtbündels in einer ersten Abstrahlrichtung, die zur Bildung des ersten Lichtbündels wenigstens ein erstes Leuchtdiodenelement und eine dem ersten Leuchtdiodenelement zugeordnete abbildende Einrichtung, der von dem ersten Leuchtdiodenelement abgegebenes Licht zuführbar ist, aufweist, und eine zweite Leuchteinheit zur Abstrahlung eines zweiten Lichtbündels in einer zweiten, von der ersten Abstrahlrichtung abweichenden Abstrahlrichtung, die zur Bildung des zweiten Lichtbündels wenigstens ein zweites Leuchtdiodenelement und eine dem zweiten Leuchtdiodenelement zugeordnete abbildende Einrichtung, der von dem zweiten Leuchtdiodenelement abgegebenes Licht zuführbar ist, aufweist.

Unter einer mobilen Leuchte wird dabei eine Leuchte verstanden, die trag- oder fahrbar ist und während des Betriebs keinen Anschluss an ein festes Stromnetz benötigt.

Mittels der Leuchteinheiten sind jeweils Lichtbündel abstrahlbar, die mittels der Leuchtdiodenelemente und der zugeordneten abbildenden Einrichtungen gebildet werden.

Bei den Leuchtdiodenelementen kann es sich grundsätzlich um eine reine Leuchtdioden oder auch um Leuchtdioden mit einem integrierten der Sammlung des von der Leuchtdiode abgegebenen Lichts dienenden Leuchtkörper, insbesondere aus Glas, handeln. Weiterhin können in jeder Leuchteinheit auch mehrere Leuchtdiodenelemente vorgesehen sein.

Zur Bildung der jeweiligen Lichtbündel wird Licht der jeweiligen Leuchtdiodenelemente den den jeweiligen Leuchtdiodenelementen, vorzugsweise einzeln, zugeordneten abbildenden Einrichtungen zugeführt und von diesen gebündelt oder zerstreut und gegebenenfalls umgelenkt. Das von den abbildenden Einrichtungen abgegebene Licht dient dann jeweils zur Bildung des von der jeweiligen Leuchteinheit abgegebenen Lichtbündels. Werden in einer Leuchteinheit mehrere Leuchtdiodenelemente verwendet, wird das Lichtbündel durch das von den in der Leuchteinheit vorhandenen Leuchtdiodenelementen über die abbildenden Einrichtungen insgesamt abgegebene Licht gebildet und braucht daher nicht unbedingt konisch zu sein.

Das erste und das zweite Lichtbündel sind jeweils in unterschiedlichen Abstrahlrichtungen abstrahlbar, die durch die Lagen der Leuchtdiodenelemente und der diesen zugeordneten abbildenden Einrichtungen bestimmt sind. Insbesondere sind die Abstrahlrichtungen jeweils relativ zu der Lage der mobilen Leuchte definiert.

Durch die unterschiedlichen Abstrahlrichtungen können daher ohne ein Schwenken der Leuchte zwei verschiedene, in den unterschiedlichen Abstrahlrichtungen liegende Raumbereiche ausgeleuchtet werden, die sich je nach Wahl des Winkels zwischen der ersten und der zweiten Abstrahlrichtung insbesondere nicht zu überschneiden brauchen.

Die abbildenden Einrichtungen ermöglichen weiterhin eine Aufweitung oder Bündelung des von den Leuchtdiodenelementen jeweils abgegebenen Lichts, die insbesondere entsprechend jeweils vorgegebenen Raumbereichen in den jeweiligen Abstrahlrichtungen so gewählt sein kann, dass der vorgegebene Raumbereich sehr effektiv ausleuchtbar ist, während möglichst wenig Licht in angrenzende, nicht zu beleuchtende Bereiche gelenkt wird. Eine verstellbare Fokussierungseinrichtung ist daher nicht notwendig.

Durch die Verwendung von Leuchtdiodenelementen als Leuchtmittel ist es zum einen möglich, bei einer vorgegebenen Energieaufnahme eine im Vergleich zu Glüh- oder Halogenbirnen wesentlich größere Lichtausbeute zu erzielen, so dass beispielsweise bei Betrieb mit einer Batterie oder einem Akku eine entweder wesentlich größere Lichtstärke oder eine wesentlich längere Leuchtdauer erzielbar ist. Zum anderen sind Leuchtdiodenelemente wesentlich langlebiger und weniger empfindlich gegen Erschütterungen als Glüh- oder Halogenbirnen.

Weiterbildungen und bevorzugte Ausführungsformen der Erfindung sind in der Beschreibung, den Ansprüchen und den Zeichnungen beschrieben.

Grundsätzlich können alle Leuchtdiodenelemente zusammen ein- und ausschaltbar sein, so dass zwei entsprechende Raumbereiche durch das erste und das zweite Lichtbündel gleichzeitig beleuchtbar sind. Häufig ist es jedoch wünschenswert, nur einen Raumbereich zu beleuchten. Beispielsweise kann der erste Raumbereich weit von dem zweiten Raumbereich entfernt liegen, so dass ein Benutzer der Leuchte nur einen der Raumbereiche betrachten kann und dann auch nur diesen zu beleuchten wünscht. Es ist daher bevorzugt, dass eine Schalteinrichtung vorgesehen ist, mittels derer die Leuchteinheiten einzeln an- und ausschaltbar sind. Besonders bevorzugt ist die Schalteinrichtung so ausgebildet, dass mittels nur eines Schalters nur die erste, nur die zweite oder die erste und die zweite Leuchteinheit an- bzw. ausschaltbar ist bzw. sind. Auf diese Weise ergibt sich ein besonders geringer Energieverbrauch, da nur die Leuchtdiodenelemente tatsächlich angeschaltet zu sein brauchen, deren Licht zur Beleuchtung eines für einen Benutzer interessanten Raumbereichs benötigt wird. Dabei brauchen aber zum Einschalten einer Leuchteinheit nicht unbedingt alle Leuchtdioden der Leuchteinheit eingeschaltet zu werden, vielmehr ist auch ein abgestuftes Einschalten der Leuchteinheit durch sukzessives Einschalten mehrerer Leuchtdiodenelemente der Leuchteinheit möglich.

Grundsätzlich können die erste und die zweite Leuchteinheit in einer festen Lage zueinander gehalten sein, so dass die erste Abstrahlrichtung und die zweite Abstrahlrichtung miteinander einen festen Winkel einschließen. In diesem Fall ist es bevorzugt, dass die abbildenden Einrichtungen der beiden Leuchteinheiten in einem Bauteil einstückig ausgebildet sind. Auf diese Weise wird eine Ausrichtung der abbildenden Einrichtungen zueinander und auf die Leuchtdiodenelemente sowie die Ausrichtung der Leuchteinheiten zueinander wesentlich vereinfacht. Darüber hinaus wird so die Fertigung der mobilen Leuchte erheblich vereinfacht, wenn das Bauteil beispielsweise durch Spritzguss eines geeigneten transparenten Kunststoffs hergestellt wird.

Alternativ ist es bevorzugt, dass eine der Leuchteinheiten so relativ zu der anderen beweglich gelagert ist, dass der Winkel zwischen der ersten und der zweiten Abstrahlrichtung veränderbar ist. Insbesondere kann eine der Leuchteinheiten relativ zu der anderen schwenkbar sein. Eine solche mobile Leuchte ist besonders flexibel einsetzbar, da ein Benutzer durch Änderung des zwischen der ersten und der zweiten Abstrahlrichtung eingeschlossenen Winkels die Leuchte an eine relative Lage verschiedener zu beleuchtender Raumbereiche anpassen kann. Besonders bevorzugt können dabei die Leuchteinheiten so zueinander schwenkbar sein, dass die Abstrahlrichtungen auch parallel verlaufen können, so dass eine Erhöhung der Beleuchtungsstärke in dieser Abstrahlrichtung ermöglicht wird.

Grundsätzlich können die erste und die zweite Abstrahlrichtung einen beliebigen Winkel einschließen, der größer als 0° und kleiner als 180° ist. Es ist jedoch besonders bevorzugt, dass die zweite Abstrahlrichtung mit der ersten Abstrahlrichtung einen Winkel einschließt, der größer als 5° und kleiner als 85° ist. In den jeweiligen Abstrahlrichtungen liegende Raumbereiche sind dann von einem Benutzer ohne größere Bewegung des Kopfes noch allein durch Bewegung der Augen betrachtbar, so dass sich in diesem Fall ein besonders großer Vorteil für einen Benutzer ergibt.

Weiterhin ist es bevorzugt, dass die Leuchteinheiten so ausgebildet sind, dass die von den Leuchteinheiten abstrahlbaren Lichtbündel divergent sind und eine Querschnittsfläche des ersten Lichtbündels in einer vorgegebenen Entfernung von der Leuchte kleiner ist als eine Querschnittsfläche des zweiten Lichtbündels in der vorgegebenen Entfernung. Die jeweiligen Querschnittsflächen sind dabei jeweils orthogonal zu den entsprechenden Abstrahlrichtungen. Da das erste Lichtbündel damit stärker gebündelt ist als das zweite Lichtbündel, kann es eine gegebene Fläche in größerer Entfernung mit größerer Intensität beleuchten, als dies durch das zweite Lichtbündel möglich ist, und daher als eine Art Fernlicht verwendet werden. Umgekehrt ermöglicht das zweite Lichtbündel die Beleuchtung einer vergleichsweise großen Fläche in einem Nahbereich. Besonders bevorzugt können hierzu die Leuchtdiodenelemente innerhalb einer Brennweite der jeweiligen abbildenden Einrichtungen angeordnet sein.

Weiterhin ist es bevorzugt, dass die wenigstens eine abbildende Einrichtung wenigstens einer der Leuchteinheiten ein fokussierendes optisches Bauelement umfasst und so ausgebildet ist, dass das Licht der entsprechenden Leuchteinheit in einer vorgegebenen Entfernung auf eine Fläche orthogonal zu der Abstrahlrichtung fokussierbar ist. Auf diese Weise kann in einer vorgegebenen Entfernung auf einer zu beleuchtenden Fläche ein im Wesentlichen scharf abgegrenzter Lichtfleck erzeugt werden.

Dabei ist es besonders bevorzugt, dass die Leuchteinheiten so ausgebildet sind, dass mittels der ersten Leuchteinheit auf einer orthogonal zu der ersten Ausbreitungsrichtung orientierten ersten Fläche in etwa 10 m Entfernung ein Lichtfleck mit einem Flächeninhalt zwischen 1m² und 4 m² und mittels der zweiten Leuchteinheit auf einer orthogonal zu der zweiten Ausbreitungsrichtung orientierten zweiten Fläche in etwa 1 m Entfernung ein Lichtfleck mit einem Flächeninhalt zwischen 0,4m² und 2 m² erzeugbar sind. Auf diese Weise ergeben sich besonders günstige Gebrauchseigenschaften insbesondere für den Fall, dass die mobile Leuchte als Stirnlampe verwendet wird.

Bei den abbildenden Einrichtungen kann es sich grundsätzlich um beliebige Einrichtungen handeln, mittels derer von den Leuchtdiodenelementen abgegebene Leuchtdiodenelementlichtbündel aufweitbar oder stärker bündelbar und gegebenenfalls ablenkbar sind. Dabei ist es bevorzugt, dass die abbildenden Einrichtungen von den Leuchtdiodenelementen beabstandete Linsen umfassen. Besonders bevorzugt kann es sich hierbei um Sammellinsen handeln. Diese können bei einer Ausführungsform eine solche Brennweite aufweisen und relativ zu den Leuchtdiodenelementen angeordnet sein, dass Licht der entsprechenden Leuchtdiodenelemente in vorgegebenen Entfernungen von den Leuchtdiodenelementen fokussierbar ist. Bei einer anderen besonders bevorzugten Ausführungsform ist das Leuchtdiodenelement innerhalb der Brennweite der Sammellinse angeordnet, so dass ein virtuelles Bild des Leuchtdiodenelements entsteht und das abgegebene Lichtbündel auseinander läuft. Eine solche Anordnung erlaubt einen sehr kompakten Aufbau auch bei größeren Brennweiten.

Um eine gute Beleuchtungswirkung zu erzielen, ist es bevorzugt, dass die erste und/oder zweite Leuchteinheit jeweils wenigstens zwei Leuchtdiodenelemente und wenigstens zwei entsprechende abbildende Einrichtungen umfassen.

Dabei ist es besonders bevorzugt, dass bei der Verwendung von Linsen als abbildenden Einrichtungen zwischen den Linsen und den Leuchtdiodenelementen Tuben angeordnet sind, durch die jeweils Licht eines Leuchtdiodenelements zu der entsprechenden Linse führbar ist, die aber eine Streuung von Licht eines Leuchtdiodenelements in den Bereich einer Linse, die einem anderen Leuchtdiodenelement zugeordnet ist, verhindern. Auf diese Weise wird ein besonders gut abgegrenztes Lichtbündel erzielt. Soll dabei möglichst wenig Licht verloren gehen, ist es besonders bevorzugt, dass die Tuben eine für Licht der Leuchtdiodenelemente hoch reflektierende innere Oberfläche aufweisen. Um eine besonders scharfe Abgrenzung des Lichtbündels zu erreichen, ist es demgegenüber besonders bevorzugt, dass die Tuben eine für Licht der Leuchtdiodenelemente nur wenig oder nicht reflektierende Oberfläche aufweisen, die insbesondere schwarz und/oder mattiert sein kann.

Alternativ kann bevorzugt zwischen einer Linse der abbildenden Einrichtungen und dem entsprechenden Leuchtdiodenelement ein sich in Abstrahlrichtung des Leuchtdiodenelements öffnender Reflektor vorgesehen sein, mittels dessen von dem Leuchtdiodenelement abgegebenes Licht bündelbar und auf die Linse führbar ist.

Weiterhin ist es bevorzugt, dass die abbildenden Einrichtungen von wenigstens zwei Leuchtdiodenelementen einer der Leuchteinheiten so ausgebildet sind, dass eine vorgegebene Fläche in einer vorgegebenen Entfernung von der mobilen Leuchte von Leuchtdiodenelementlichtbündeln dieser Leuchtdiodenelemente beleuchtbar ist. In diesem Fall dient das zusätzliche Leuchtdiodenelement also nicht zur Vergrößerung der beleuchtbaren Fläche, sondern es wird eine erhöhte Lichtintensität auf der gleichen Fläche erzielt, indem die von den Leuchtdiodenelementen ausgehenden Leuchtdiodenelementlichtbündel, die das Lichtbündel der Leuchteinheit wenigstens teilweise bilden, auf die gleiche Fläche gelenkt werden. Dies ist insbesondere für die Beleuchtung in größerer Entfernung von der erfindungsgemäßen Leuchte von Bedeutung, in der die Lichtintensität entfernungsbedingt geringer ist als in einem Nahbereich. Die abbildenden Einrichtungen können dazu in einem entsprechenden Winkel zueinander geneigt sein, es ist jedoch auch möglich, die Leuchtdiodenelemente mit ihrer Längsachse bzw. Strahlrichtung in einem geeigneten Abstand von der optischen Achse der abbildenden Einrichtungen, aber im Wesentlichen parallel zu diesen anzuordnen.

Um für einen Betrachter eine möglichst angenehme Beleuchtung zu ermöglichen und insbesondere auch die Erkennung von Farben zu erleichtern, ist es bevorzugt, dass die Leuchtdiodenelemente Leuchtdiodenelemente zur Abgabe von im Wesentlichen weißem Licht sind.

Die erfindungsgemäße mobile Leuchte kann für verschiedenste Einsatzzwecke ausgebildet sein. Bei einer bevorzugten Weiterbildung ist es vorgesehen, dass die Leuchte als Fahrzeugleuchte, insbesondere als Fahrradleuchte, ausgebildet ist. Insbesondere kann sie an einem Fahrrad als Frontleuchte verwendet werden, wobei die erste Leuchteinheit zur Bereitstellung von Fernlicht, das in einer Entfernung von etwa 8 bis 10 m vor der Leuchte auf die Fahrbahn trifft, und die zweite Leuchteinheit zur Bereitstellung von Licht für den Nahbereich, das heißt einen Bereich in einer Entfernung von 1 bis 2 m vor dem Fahrrad, dienen kann. Die erfindungsgemäße Leuchte kann dabei entsprechende Befestigungsmittel zur Befestigung der Leuchte an einem Fahrrad aufweisen.

Bei einer anderen bevorzugten Weiterbildung ist es vorgesehen, dass die Leuchte als Stirnlampe ausgebildet ist. Sie eignet sich dann besonders als Beleuchtung in der Dunkelheit, wenn ein Benutzer alternativ Licht im Bereich der Hände oder Licht in der Ferne benötigt, wie es beispielsweise beim Camping der Fall ist. Insbesondere kann sie dazu ein elastisches Kopfband aufweisen, mittels dessen sie an einem Kopf eines Benutzers befestigbar ist.

Insbesondere dabei ist es besonders bevorzugt, dass die Leuchte ein flächiges Stützelement aufweist, das relativ zu den Leuchteinheiten in einer Ebene schwenkbar ist, die im Wesentlichen parallel zu der ersten und zweiten Abstrahlrichtung ausgerichtet ist. Auf diese Weise kann die mobile Leuchte unter Anlage des Stützelements an einem Gegenstand oder an einem Kopf eines Benutzers relativ zu diesem sicher befestigt werden, wobei gleichzeitig die Orientierung der beiden Abstrahlrichtungen relativ zu dem Gegenstand oder dem Kopf einstellbar ist.

Dabei ist es besonders bevorzugt, dass ein Gehäuse vorgesehen ist, in dem die Leuchteinheiten angeordnet sind und dass an dem Gehäuse und an dem Stützelement zueinander komplementäre Rastelemente angeordnet sind, mittels derer das Stützelement in seiner Relativlage zu dem Gehäuse sicherbar ist. Auf diese Weise kann nach einer Justierung der erfindungsgemäßen mobilen Leuchte relativ zu einem diese tragenden Gegenstand oder Kopf eine Dejustierung sehr einfach und sicher verhindert werden. Insbesondere kann dabei eines der Rastelemente durch einen Arm gegeben sein, an dem mehrere Rasthaken ausgebildet sind, die durch Schwenken des Stützelements relativ zu dem Gehäuse in den Bereich eines komplementären Rastelements, beispielsweise mit einer Rastöffnung, bewegbar sind, mit dem sie dann zusammenwirken.

Insbesondere bei Ausbildung der Leuchte als Stirnlampe ist es bevorzugt, dass ein Gehäuse zur Aufnahme der Leuchteinheiten und zwei an sich gegenüberliegenden Seiten des Gehäuses angeordnete, mit dem Gehäuse verbundene Laschen vorgesehen sind, an denen ein elastisches Band zur Befestigung der Leuchte an einem Gegenstand oder einem Kopf einer Person haltbar ist und die so flexibel sind, dass deren Form bei Befestigung an dem Gegenstand bzw. Kopf durch die Spannung des elastischen Bandes an die Form des Gegenstands bzw. Kopfes anpassbar ist. Auf diese Weise wird eine Kraft zwischen der Leuchte und einem Gegenstand bzw. Kopf, an dem diese gehalten ist, auf eine größere Fläche verteilt, so dass Druckstellen vermieden werden. Darüber hinaus ergibt sich durch den relativ großen Abstand der durch die Laschen gebildeten Anlageflächen ein besonders sicherer Sitz der Leuchte auch dann, wenn größere Drehmomente auf diese wirken.

Die erfindungsgemäße Leuchte kann auf verschiedene Art und Weise mit Strom versorgt werden. Insbesondere bei Ausbildung als Stirnleuchte ist es bevorzugt, dass die Leuchteinheiten in einem Gehäuse angeordnet sind, in dem ein Batteriefach vorgesehen ist. Diese sehr kompakte Ausführungsform der erfindungsgemäßen Leuchte eignet sich insbesondere dann, wenn eine nur sehr kleine Leuchte mit relativ geringer Leuchtleistung bzw. Leuchtdauer benötigt wird.

Nach einer anderen bevorzugten Weiterbildung ist es bevorzugt, dass die Leuchteinheiten in einem Gehäuse an einem elastischen Band gehalten sind und dass an dem Band ein Batteriebehälter gehalten ist. In diesen können Batterien oder Akkus eingesetzt werden, die zur Speisung der Leuchtdiodenelemente in den Leuchteinheiten dienen. Dadurch kann das Gehäuse mit den Leuchteinheiten besonders klein und leicht gehalten werden, so dass auch bei schnellen Bewegungen nur vergleichsweise kleine Trägheitskräfte wirken und das Gehäuse mit den Leuchteinheiten so schnell schwenkbar ist.

Die Erfindung wird nun weiter beispielhaft anhand der Zeichnungen erläutert. Es zeigen:
- Fig. 1: eine Draufsicht auf eine mobile Leuchte nach einer bevorzugten Ausführungsform der Erfindung in Form einer Stirnlampe,
- Fig. 2: eine Seitenansicht eines Leuchtenkopfs der mobilen Leuchte in Fig. 1,
- Fig. 3: eine schematische Schnittansicht durch den Leuchtenkopf in Fig. 2,
- Fig. 4: eine Draufsicht auf einen Tubenkörper des Leuchtenkopfs,
- Fig. 5: eine Seitenansicht des Leuchtenkopfs in Fig. 2 mit einem ausgeschwenkten Stützelement,
- Fig. 6: eine schematische Schnittansicht durch eine Gehäuserückwand und das Stützelement des Leuchtenkopf in Fig. 5,
- Fig. 7: eine schematische Schnittansicht durch einen Batteriebehälter Leuchte in Fig. 1,
- Fig. 8A, B, C: eine schematische Schnittansicht durch den nur teilweise dargestellten Leuchtenkopf in Fig. 2 mit einem Strahlenverlauf von von dem Leuchtenkopf abgebbarem Licht, und Formen von Lichtflecken, die entstehen, wenn Lichtbündel in Fig. 8A auf in Fig. 8A gezeigte Flächen treffen.

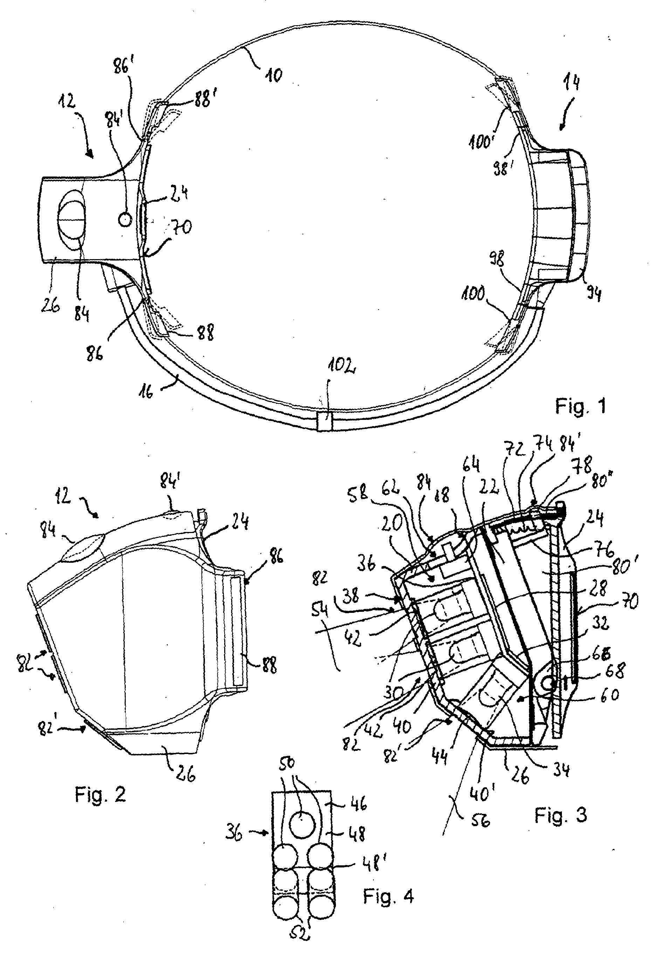

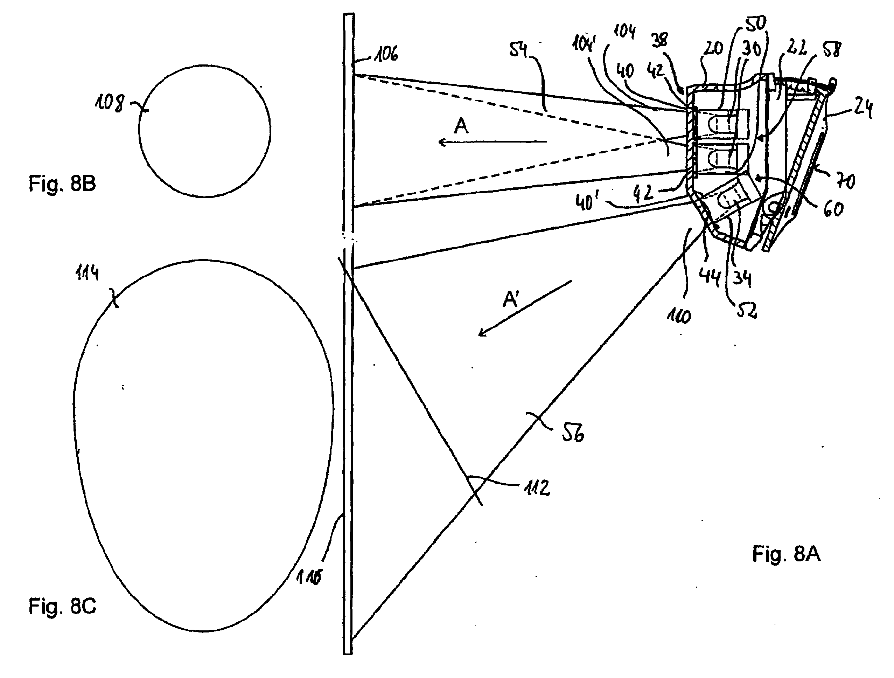

In Fig. 1 umfasst eine als Stirnleuchte ausgebildete mobile Leuchte nach einer bevorzugten Ausführungsform der Erfindung einen an einem elastischen, stark dehnbaren Kopfband 10 gehaltenen Leuchtenkopf 12, einen Batteriebehälter 14 sowie ein ebenfalls an dem Kopfband 10 gehaltenes Verbindungskabel 16, das den Batteriebehälter 14 mit dem Leuchtenkopf 12 verbindet und zur Stromversorgung des Leuchtenkopfs 12 durch in dem Batteriebehälter 14 gehaltene Batterien oder Akkus dient.

Der in den Fig. 2, 3, 5 und 6 genauer gezeigte Leuchtenkopf 12 umfasst ein im Folgenden als Leuchtenkopfgehäuse bezeichnetes Gehäuse 18 mit einem Gehäusevorderteil 20 und einer Gehäuserückwand 22, ein an dem Leuchtenkopfgehäuse 18 bzw. dessen Gehäuserückwand 22 schwenkbar gelagertes Stützelement 24 und einen im Bereich der Gehäuserückwand 22 und des Stützelements 24 offenen, sonst aber das Leuchtenkopfgehäuse 18 umschließenden Mantel 26, der im Folgenden als Leuchtenkopfgehäusemantel bezeichnet wird.

In dem Leuchtenkopfgehäuse 18 sind auf einer ersten Platine 28 drei nicht alle in den Figuren sichtbare erste Leuchtdiodenelemente 30 für weißes Licht und auf einer zweiten Platine 32 zwei nicht alle in den Figuren sichtbare zweite Leuchtdiodenelemente 34 für weißes Licht sowie entsprechende Versorgungsschaltungen für die Leuchtdiodenelemente angeordnet. Die Leuchtdiodenelemente 30 und 34 greifen teilweise in einen in dem Leuchtenkopfgehäuse 18 befestigten Tubenkörper 36.

Das Gehäusevorderteil 20 aus einem transparenten thermoplastischen Kunststoff wie zum Beispiel Polycarbonat weist eine Vorderwand 38 mit einem oberen ebenen Abschnitt 40 und einem unteren ebenen Abschnitt 40', der in einem vorgegebenen Winkel von im Beispiel etwa 45° in Richtung auf die Gehäuserückwand 22 zu abgewinkelt ist, auf.

In dem oberen Abschnitt 40 der Vorderwand 38 sind drei an den Ecken eines gleichseitigen Dreiecks angeordnete erste Sammellinsen 42 gleicher Brennweite und in dem unteren Abschnitt 40' weiterhin zwei nebeneinander liegende zweite Sammellinsen 44, deren jeweils gleiche Brennweite sich von der der ersten Sammellinsen 42 unterscheidet, ausgebildet. Die optischen Achsen der ersten Sammellinsen 42 verlaufen mit gleichen, geringen vorgegebenen ersten Neigungswinkeln gegenüber einer Senkrechten auf die Ebene des Abschnitts 40 aufeinander zu. Ähnlich sind die optischen Achsen der zweiten Sammellinsen 44 mit jeweils gleichen, geringen, vorgegebenen zweiten Neigungswinkeln gegenüber einer Senkrechten aufeinander zu geneigt, wobei eine durch die optischen Achsen aufgespannte Ebene im Wesentlichen orthogonal zu der Ebene des Abschnitts 40' orientiert ist.

Der einstückige Tubenkörper 36 (vgl. Fig. 4) weist eine Grundplatte 46 auf, die ebenfalls einen oberen Abschnitt 48 und einen unteren, gegenüber dem oberen Abschnitt 48 ebenfalls um den vorgegebenen Winkel, im Beispiel also etwa 45°, abgewinkelten unteren Abschnitt 48' umfasst. Auf dem oberen Abschnitt 48 sind drei erste Tuben 50 angeordnet, deren Längsachsen orthogonal zu dem oberen Abschnitt 40 der Vorderwand durch die Mittelpunkte der entsprechenden ersten Sammellinsen 42 verlaufen und die an der Vorderwand 38 anliegen, wenn der Tubenkörper 36 in das Leuchtenkopfgehäuse 18 eingesetzt ist. Auf dem unteren Bereich der Grundplatte 46 sind zwei zweite Tuben 52 angeordnet, deren Längsachsen im eingebauten Zustand der Tubenkörper 36 orthogonal zu dem unteren Abschnitt 40' der Vorderwand durch die Mittelpunkte der entsprechenden zweiten Sammellinsen 42 verlaufen und die an der Vorderwand 38 anliegen.

Die ersten und zweiten Tuben 50 und 52 sind auf ihrer Innenseite schwarz und mattiert und weisen gleich Länge auf. Sie münden jeweils in entsprechenden Öffnungen in der Grundplatte 46, die zusammen mit den entsprechenden Enden der Tuben 50 und 52 Aufnahmen für Leuchtkörper der Leuchtdiodenelemente 30 bzw. 34 bilden. Die erste Platine 28 und die zweite Platine 32 sind an der Grundplatte 46 befestigt, wobei die entsprechenden Leuchtdiodenelemente 30 bzw. 34 im Wesentlichen formschlüssig in den entsprechenden ersten Tuben 50 bzw. zweiten Tuben 52 angeordnet und durch diese mit ihren Längsachsen und damit Abstrahlrichtungen parallel zueinander ausgerichtet sind.

Von den Leuchtdiodenelementen 30 bzw. 34 abgegebenes Licht wird durch die entsprechenden Tuben 50 bzw. 52 und die so den Leuchtdiodenelementen jeweils zugeordneten Sammellinsen 42 bzw. 44 geführt und bildet erste bzw. zweite abgegebene Lichtbündel 54 bzw. 56. Die ersten Leuchtdiodenelemente 30 und die ersten Sammellinsen 42 als erste abbildende Einrichtungen bilden daher eine erste Leuchteinheit 58, während die zweiten Leuchtdiodenelemente 34 zusammen mit den zweiten Sammellinsen 44 als zweiten abbildenden Einrichtungen eine zweite Leuchteinheit 60 darstellen, die gegenüber der ersten Leuchteinheit 58 in dem vorgegebenen Winkel von im Beispiel etwa 45° angeordnet ist.

Ein teilweise in einer Schalteröffnung 62 auf einer Oberseite des Gehäusevorderteils 22 angeordneter Schalter 64 bildet zusammen mit entsprechenden Schaltungen auf der ersten Platine 28 und der zweiten Platine 32 eine Schalteinrichtung, mittels derer entweder nur die ersten Leuchtdiodenelemente 30 und damit die Leuchteinheit 58 oder nur die zweiten Leuchtdiodenelemente 34 und damit die Leuchteinheit 60 oder auch beide Leuchtdiodenelemente 30 und 34 und damit die Leuchteinheit 58 und 60 gemeinsam ein- bzw. ausgeschaltet werden können.

Das Stützelement 24 ist flächig ausgebildet und mittels Lageraugen 66 auf entsprechenden Lagerzapfen 68 an der Gehäuserückwand 22 des Leuchtenkopfgehäuses 18 um eine entsprechende Achse in einer im Wesentlichen zu einer Ebene des Stützelements orthogonalen Ebene schwenkbar gelagert (vgl. Fig. 2 und 3 bzw. Fig. 5 und 6).

Weiterhin ist auf einer dem Leuchtenkopfgehäuse 18 abgewandten Seite des Stützelements 24 eine Anlagefläche 70 ausgebildet, die beim Tragen der Stirnlampe an einer Stirn eines Benutzers anliegt, wenn dieser das elastische Kopfband 10 über seinen Kopf gestreift hat.

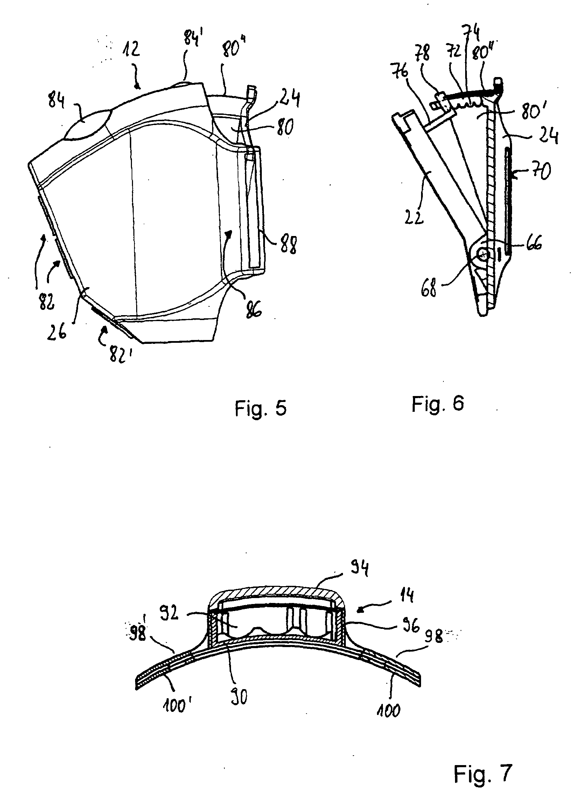

Zur Sicherung des Stützelements 24 in einer eingestellten Schwenklage gegenüber der Gehäuserückwand 22 sind an dem Stützelement 24 eine kreissegmentförmig gewölbte Zahnstange 72 mit Rastzähnen 74 als Rastelementen und an der Gehäuserückwand 22 ein federnder, an dem freien Ende hakenförmigen Rastarm 76 mit einem Endvorsprung 78 mit einer Rastöffnung für die Rastzähne 74 als komplementäres Rastelement angeordnet. Die Zahnstange 72 ist so gewölbt und relativ zu dem Rastarm 76 so angeordnet, dass die Zahnstange 72 durch die Rastöffnung in dem Endvorsprung 78 greift und eine Unterkante der Rastöffnung durch eine Vorspannung des federnden Rastarms 76 in die Lücken zwischen den Rastzähnen 74 einrastbar ist. Eine Bewegung des Stützelements 24 gegenüber der Gehäuserückwand 22 wird so verhindert. Durch Druck auf den Endvorsprung 78 mit der Rastöffnung ist der federnde Rastarm 76 von der Zahnstange 72 weg bewegbar, so dass die Zahnstange 72 in der Rastöffnung verschiebbar und das Stützelement 24 gegenüber der Gehäuserückwand 22 schwenkbar ist (vgl. Fig. 5 und 6).

An dem Stützelement 24 sind weiterhin seitliche kreissektorartige Abdeckwände 80 und 80' und eine obere Abdeckwand 80" vorgesehen (vgl. Fig. 3 und 6).

Das Stützelement 24 weist darüber hinaus in den Figuren nicht gezeigte Schlitze auf, durch die das Kopfband 10 mit seinen Enden führbar und durch Zurückfalten und Vernähen befestigbar ist.

Der das Leuchtenkopfgehäuse 18 teilweise umschließende Leuchtenkopfgehäusemantel 26 ist aus einem thermoplastischen, elastomeren Material, z.B. einem entsprechenden Polyurethanpolymer, gebildet. Auf einem an der Vorderwand 38 anliegenden Bereich des Leuchtenkopfgehäusemantels 26 sind den ersten und zweiten Sammellinsen 42 bzw. 44 entsprechende Öffnungen 82 und 82' ausgebildet, sodass Licht durch diese abstrahlbar ist. Bis auf diese Öffnungen 82 und 82' und eine Öffnung im Bereich des Stützelements 24 umschließt der Leuchtenkopfgehäusemantel 26 das Gehäuse 18 vollständig.

Der Leuchtenkopfgehäusemantel 26 erstreckt sich über die Gehäuserückwand 22 hinaus bis zu einem umlaufenden Außenrand des Stützelements 24, wenn dieses an die Gehäuserückwand 22 geschwenkt ist. Die Abdeckwände 80, 80' und 80" sind so geformt, dass sie zusammen mit dem Leuchtenkopfgehäusemantel 26 einen zwischen dem Stützelement 24 und der Gehäuserückwand 22 gebildeten Hohlraum im Wesentlichen abdecken (vgl. Fig. 2 und 5). Dabei liegen die seitlichen Abdeckwände 80 und 80' mit ihren Stirnflächen an der Gehäuserückwand 22 an, wenn das Stützelement 24 an die Gehäuserückwand 22 geschwenkt ist (vgl. Fig. 3).

Da der Leuchtenkopfgehäusemantel 26 aus einem elastomeren Material gebildet ist, können durch entsprechende Ausbeulungen 84 und 84' der Schalter 64 und der Endvorsprung 78 mit der Rastöffnung bedient werden.

Der Leuchtenkopfgehäusemantel 26 dient weiterhin zur Abdichtung des Leuchtenkopfgehäuses 18, da er an diesem eng anliegt und so ein Eindringen von Wasser zwischen den Leuchtenkopfgehäusemantel 26 und das Leuchtenkopfgehäuse 18 weitgehend verhindert. Dadurch kann auch kein Wasser zwischen dem Gehäusevorderteil 20 und der Gehäuserückwand 22 hindurch oder durch die Schalteröffnung 62 in das Innere des Leuchtenkopfgehäuses 18 eindringen.

Weiterhin setzt sich der Leuchtenkopfgehäusemantel 26 seitlich des Leuchtenkopfgehäuses 18 in zwei flexible Laschen 86 und 86' fort, die an ihren Enden jeweils Schlaufen 88 und 88' mit schlitzförmigen Öffnungen aufweisen, deren Höhe der Breite des Kopfbandes 10 entspricht und durch die das Kopfband 10 führbar ist. Die Laschen 86 und 86' sind so flexibel (vgl. Fig. 1), dass sie durch Zug an dem Kopfband 10, wie er beim Aufsetzen der Stirnlampe auf einen Kopf auftritt, an den Kopf gezogen werden können, und an diesem anliegen. Dadurch ergibt sich eine vergleichsweise große Anlagefläche der erfindungsgemäßen Stirnleuchte an dem Kopf, wodurch zum einen Druckstellen vermieden werden und zum andere aufgrund der großen, sich auch weit zu den Seiten hin erstreckenden Anlagefläche ein besonders sicherer Sitz gewährleistet wird.

Der in Fig. 7 genauer gezeigte Batteriebehälter 14 weist ein Gehäuse aus einem thermoplastischen Kunststoff mit einem Batteriegehäuseunterteil 90 mit einem Batteriefach 92 und mit einem schwenkbar mit dem Batteriegehäuseunterteil 90 verbundenen Batteriebehälterdeckel 94 auf. Das Batteriegehäuseunterteil 90 ist in analoger Weise wie das Leuchtenkopfgehäuse 18 des Leuchtenkopfs 12 in einem Mantel 96 aus einem elastomeren thermoplastischen Material, im Folgenden als Batteriegehäusemantel bezeichnet, teilweise umschlossen, der wie der Leuchtenkopfgehäusemantel 26 zwei Laschen 98 und 98' aufweist, an deren freien Enden Schlaufen 100 und 100' zur Aufnahme des Kopfbandes 10 vorgesehen sind, die wie die Schlaufen 86 und 86' ausgebildet sind. Ein dem Batteriebehälterdeckel 94 zugewandter Rand des Batteriegehäusemantels 96 dient gleichzeitig als Dichtung zur Abdichtung eines möglicherweise auftretenden Spalts zwischen dem Batteriegehäuseunterteil 90 und dem Batteriebehälterdeckel 94.

Das in Fig. 1 nur schematisch gezeigte, über einen Klemmhalter 102 an dem Kopfband 10 gehaltene Verbindungskabel 16 weist zwei mit entsprechenden Polen des Batteriefachs 92 in dem Batteriebehälter 14 verbundene Adern auf, die mit entsprechenden Kontakten auf den ersten und zweiten Platinen 28 und 32 verbunden sind. Das Verbindungskabel 16 kann dabei insbesondere einen gewendelten Teilbereich aufweisen, so dass der Batteriebehälter an dem Kopfband 10 verschiebbar ist.

Zur Herstellung des Leuchtenkopfs 12 können das Gehäusevorderteil 20 zusammen mit dem Leuchtenkopfgehäusemantel 26 und das Batteriegehäuseunterteil 90 mit dem Batteriebehälterdeckel 94 zusammen mit dem Batteriegehäusemantel 96 durch Zwei-Komponenten-Spritzguss hergestellt werden. Danach kann der Tubenkörper 36 in das Gehäusevorderteil 20 eingelegt und darin befestigt werden, woraufhin die erste und zweite Platine 28 bzw. 32 mit den ersten Leuchtdiodenelementen 30 bzw. zweiten Leuchtdiodenelementen 34 in die Grundplatte 46 mit den Tuben 50 bzw. 52 geschoben und an der Grundplatte 46 befestigt wird. Sodann kann die Gehäuserückwand 22 mit dem daran gehaltenen Stützelement 24 an die Gehäuserückwand 22 angeschraubt werden.

Der Strahlengang des von den Leuchtdiodenelementen 30 bzw. 34 abgegebenen Lichts ist ausführlicher schematisch in Fig. 8A gezeigt.

Die ersten Leuchtdiodenelemente 30 erzeugen erste Leuchtdiodenelementlichtbündel mit im Wesentlichen parallelen Abstrahlrichtungen, von denen in Fig. 8A nur die Leuchtdiodenelementlichtbündel 104 und 104' sichtbar sind und deren Öffnungswinkel und Richtung nach Passieren der ersten Tuben 50 von den ersten abbildenden Einrichtungen, d.h. den ersten Sammellinsen 42, geändert wird, wenn sie diese durchlaufen. Aus den so gebildeten ersten Leuchtdiodenelementlichtbündeln wird das erstes Lichtbündel 54 der ersten Leuchteinheit 58 gebildet. Da zum einen die optischen Achsen der ersten Sammellinsen 42 mit gleichen Winkeln gegenüber der Senkrechten auf den Abschnitt 40 aufeinander zu geneigt sind und die ersten Leuchtdiodenelemente 30 an den Ecken eines gleichseitigen Dreiecks mit zueinander im Wesentlichen parallelen Abstrahlrichtungen angeordnet sind, ergibt sich damit eine in Fig. 8A von rechts nach links verlaufende erste Abstrahlrichtung A der ersten Leuchteinheit 58, die im Wesentlichen orthogonal zu dem oberen Abschnitt 40 der Vorderwand 38 des Leuchtenkopfgehäuses 18 ausgerichtet ist.

Die Neigung der optischen Achsen der ersten Sammellinsen 42 zueinander und gegenüber einer Senkrechten auf den Abschnitt 40 ist so gewählt, dass die durch die Sammellinsen 42 gebündelten, von den ersten Leuchtdiodenelementen 30 abgegebenen ersten Leuchtdiodenelementlichtbündel 104 und 104' sich in einer Entfernung von etwa 60 cm von der Lampe zu überschneiden beginnen und sich in einer Entfernung von etwa 10 m vollständig überschneiden. Bei Beleuchtung einer zur der Abstrahlrichtung A orthogonalen Fläche 106 im Abstand von etwa 10 m, die in Fig. 8A nicht maßstabsgetreu gezeigt ist, ergibt sich, wie in Fig. 8B gezeigt, ein im Wesentlichen kreisförmiger Lichtfleck 108 mit einem Flächeninhalt von ca. 2,5m², der dem der Querschnittsfläche des ersten Lichtbündels 54 in diesem Abstand entspricht. Der in der Fig. 8A gezeigte Öffnungswinkel des durch die Leuchtdiodenelementlichtbündel der drei Leuchtdiodenelemente 30 gebildeten ersten Lichtbündels 54 ist übertrieben groß gezeichnet.

Das erste Lichtbündel 54 eignet sich daher zur Beleuchtung eines entfernten Raumbereichs.

Die zweiten Leuchtdiodenelemente 34 erzeugen zweite Leuchtdiodenelementlichtbündel mit im Wesentlichen parallelen Abstrahlrichtungen, von denen in Fig. 8A nur das Leuchtdiodenelementlichtbündel 110 sichtbar ist und deren Öffnungswinkel und Richtung nach Passieren der zweiten Tuben 52 von den zweiten abbildenden Einrichtungen, d.h. den zweiten Sammellinsen 44, geändert wird, wenn sie diese durchlaufen. Aus den so gebildeten zweiten Leuchtdiodenelementlichtbündeln wird das zweite Lichtbündel 56 der zweiten Leuchteinheit 60 gebildet. Da zum einen die optischen Achsen der zweiten Sammellinsen 44 mit gleichen Winkeln gegenüber der Senkrechten auf den unteren Abschnitt 40' aufeinander zu geneigt sind und die zweiten Leuchtdiodenelemente 34 in einer Richtung parallel zu einer Kante zwischen den Abschnitten 40 und 40' mit zueinander im Wesentlichen parallelen Abstrahlrichtungen angeordnet sind, ergibt sich damit eine zweite Abstrahlrichtung A' der zweiten Leuchteinheit 60, die im Wesentlichen orthogonal zu dem unteren Abschnitt 40' der Vorderwand 38 des Leuchtenkopfgehäuses 18 ausgerichtet ist und damit mit der ersten Abstrahlrichtung A einen dem vorgegebenen Winkel zwischen den Abschnitten 40 und 40' entsprechenden Winkel von im Beispiel etwa 45° einschließen. Das erste und das zweite Lichtbündel 54 und 56 überschneiden sich daher nicht, so dass mit ihnen voneinander verschiedene Raumbereiche, die sich nicht überschneiden, beleuchtbar sind.

Die Neigung der optischen Achsen der zweiten Sammellinsen 42 zueinander und gegenüber einer Senkrechten auf den unteren Abschnitt 40' ist so gewählt, dass sich die durch die zweiten Sammellinsen 44 gebündelten, von den zweiten Leuchtdiodenelementen 34 abgegebenen zweiten Leuchtdiodenelementlichtbündel 110 in einer Entfernung von etwa 1 m von der Leuchte vollständig überschneiden. Wie in Fig. 8A schematisch gezeigt ergibt sich bei Beleuchtung einer zur der zweiten Abstrahlrichtung A' orthogonalen Fläche 112 ein im Wesentlichen kreisförmiger Lichtfleck mit einem Flächeninhalt von ca.0,75 m², der dem der Querschnittsfläche des zweiten Lichtbündels 56 in diesem Abstand entspricht. Die Querschnittsfläche des ersten Lichtbündels ist daher in 1m Abstand kleiner als die des zweiten Lichtbündels.

Auf einer gegenüber der ersten Ausbreitungsrichtung A senkrechten Fläche 116 ergibt das zweite Lichtbündel 56 dann einen im Wesentlichen ovalen Lichtfleck 114, der in dieser Entfernung scharf abgegrenzt ist (vgl. Fig. 8C).

Das zweite Lichtbündel 56 kann daher als Nahlicht zur Beleuchtung von Gegenständen im Bereich der Hände eines Benutzers der Stirnlampe verwendet werden.

Durch die Schwenkbarkeit des Stützelements 24 kann die Neigung des Leuchtenkopfs 12 und damit die der ersten und zweiten Abstrahlrichtungen A und A' dabei an die Neigung der Stirn eines Trägers angepasst werden.

### Bezugszeichenliste

- 10: Kopfband
- 12: Leuchtenkopf
- 14: Batteriebehälter
- 16: Verbindungskabel
- 18: Leuchtenkopfgehäuse
- 20: Gehäusevorderteil
- 22: Gehäuserückwand
- 24: Stützelement
- 26: Leuchtenkopfgehäusemantel
- 28: erste Platine
- 30: erste Leuchtdiodenelemente
- 32: zweite Platine
- 34: zweite Leuchtdiodenelemente
- 36: Tubenkörper
- 38: Vorderwand
- 40, 40': oberer und untere Abschnitt
- 42: erste Sammellinsen
- 44: zweite Sammellinsen
- 46: Grundplatte
- 48, 48': oberer und unterer Abschnitt
- 50: erste Tuben
- 52: zweite Tuben
- 54: Lichtbündel
- 56: Lichtbündel
- 58: erste Leuchteinheit
- 60: zweite Leuchteinheit
- 62: Schalteröffnung.
- 64: Schalter
- 66: Lageraugen
- 68: Lagerzapfen
- 70: Anlagefläche
- 72: Zahnstange
- 74: Rastzähne
- 76: Rastarm
- 78: Endvorsprung
- 80, 80', 80": Abdeckwände
- 82, 82': Öffnungen
- 84,84': Ausbeulungen
- 86, 86': Laschen
- 88, 88': Schlaufen
- 90: Batteriegehäuseunterteil
- 92: Batteriefach
- 94: Batteriebehälterdeckel
- 96: Batteriegehäusemantel
- 98,98': Laschen
- 100, 100': Schlaufen
- 102: Klemmhalter
- 104, 104': erste Leuchtdiodenelementlichtbündel
- 106: Fläche
- 108: Lichtfleck
- 110: zweites Leuchtdiodenelementlichtbündel
- 112: Fläche
- 114: Lichtfleck
- 116: Fläche

- A: erste Ausbreitungsrichtung
- A': zweite Ausbreitungsrichtung

## Patentansprüche

1. Mobile Leuchte mit
einer ersten Leuchteinheit (58) zur Abstrahlung eines ersten Lichtbündels (54) in einer ersten Abstrahlrichtung (A), die zur Bildung des ersten Lichtbündels (54) wenigstens ein erstes Leuchtdiodenelement (30) und eine dem ersten Leuchtdiodenelement (30) zugeordnete abbildende Einrichtung (42), der von dem ersten Leuchtdiodenelement (30) abgegebenes Licht zuführbar ist, aufweist, und
einer zweiten Leuchteinheit (60) zur Abstrahlung eines zweiten Lichtbündels (56) in einer zweiten, von der ersten Abstrahlrichtung abweichenden Abstrahlrichtung (A'), die zur Bildung des zweiten Lichtbündels (56) wenigstens ein zweites Leuchtdiodenelement (34) und eine dem zweiten Leuchtdiodenelement (34) zugeordnete abbildende Einrichtung (44), der von dem zweiten Leuchtdiodenelement (34) abgegebenes Licht zuführbar ist, aufweist.

2. Mobile Leuchte nach Anspruch 1,
**dadurch gekennzeichnet,**
**dass** eine Schalteinrichtung (64) vorgesehen ist, mittels derer die Leuchteinheiten (558, 60) einzeln an- und ausschaltbar sind.

3. Mobile Leuchte nach Anspruch 1 oder 2,
**dadurch gekennzeichnet,**
**dass** die abbildenden Einrichtungen (42, 44) der beiden Leuchteinheiten (58, 60) in einem Bauteil (20) einstückig ausgebildet sind.

4. Mobile Leuchte nach Anspruch 1 oder 2,
**dadurch gekennzeichnet,**
**dass** eine der Leuchteinheiten so relativ zu der anderen beweglich gelagert ist, dass der Winkel zwischen der ersten und der zweiten Abstrahlrichtung veränderbar ist.

5. Mobile Leuchte nach einem der vorhergehenden Ansprüche,
**dadurch gekennzeichnet,**
**dass** die zweite Abstrahlrichtung (A') mit der ersten Abstrahlrichtung (A) einen Winkel einschließt, der größer als 5° und kleiner als 85° ist.

6. Mobile Leuchte nach einem der vorhergehenden Ansprüche,
**dadurch gekennzeichnet,**
**dass** die Leuchteinheiten (58, 60) so ausgebildet sind, dass die von den Leuchteinheiten (58, 60) abstrahlbaren Lichtbündel (54, 56) divergent sind und eine Querschnittsfläche des ersten Lichtbündels (54) in einer vorgegebenen Entfernung von der Leuchte kleiner ist als eine Querschnittsfläche des zweiten Lichtbündels (56) in der vorgegebenen Entfernung.

7. Mobile Leuchte nach einem der Ansprüche 1 bis 5,
**dadurch gekennzeichnet,**
**dass** die wenigstens eine abbildende Einrichtung wenigstens einer der Leuchteinheiten ein fokussierendes optisches Bauelement umfasst und so ausgebildet ist, dass das Licht der entsprechenden Leuchteinheit in einer vorgegebenen Entfernung auf eine Fläche orthogonal zu der Abstrahlrichtung fokussierbar ist.

8. Mobile Leuchte nach einem der vorhergehenden Ansprüche,
**dadurch gekennzeichnet,**
**dass** die Leuchteinheiten (58, 60) so ausgebildet sind, dass mittels der ersten Leuchteinheit (58) auf einer orthogonal zu der ersten Ausbreitungsrichtung (A) orientierten ersten Fläche in etwa 10 m Entfernung ein Lichtfleck mit einem Flächeninhalt zwischen 1m² und 4m² und mittels der zweiten Leuchteinheit (60) auf einer orthogonal zu der zweiten Ausbreitungsrichtung orientierten zweiten Fläche in etwa 1 m Entfernung ein Lichtfleck (114) mit einem Flächeninhalt zwischen 0,4m² und 2m² erzeugbar sind

9. Mobile Leuchte nach einem der vorhergehenden Ansprüche,
**dadurch gekennzeichnet,**
**dass** die abbildenden Einrichtungen von den Leuchtdiodenelementen beabstandete Linsen (42, 44) umfassen.

10. Mobile Leuchte nach einem der vorhergehenden Ansprüche,
**dadurch gekennzeichnet,**
**dass** die erste und/oder zweite Leuchteinheit (58, 60) jeweils wenigstens zwei Leuchtdiodenelemente (30, 34) und wenigstens zwei entsprechende abbildende Einrichtungen (42, 44) umfassen.

11. Mobile Leuchte nach Anspruch 10,
**dadurch gekennzeichnet,**
**dass** die abbildenden Einrichtungen (42, 44) von wenigstens zwei Leuchtdiodenelementen (30, 34) einer der Leuchteinheiten (58, 60) so ausgebildet sind, dass eine vorgegebene Fläche (106, 108) in einer vorgegebenen Entfernung von der mobilen Leuchte von Leuchtdiodenelementlichtbündeln (104, 104', 110) dieser Leuchtdiodenelemente (30, 40) beleuchtbar ist.

12. Mobile Leuchte nach einem der vorhergehenden Ansprüche,
**dadurch gekennzeichnet,**
**dass** die Leuchtdiodenelemente (30, 34) Leuchtdiodenelemente zur Abgabe von im Wesentlichen weißem Licht sind.

13. Mobile Leuchte nach einem der vorhergehenden Ansprüche,
**dadurch gekennzeichnet,**
**dass** die Leuchte als Fahrzeugleuchte, insbesondere als Fahrradleuchte, ausgebildet ist.

14. Mobile Leuchte nach einem der Ansprüche 1 bis 12,
**dadurch gekennzeichnet,**
**dass** die Leuchte als Stirnlampe ausgebildet ist.

15. Mobile Leuchte nach einem der vorhergehenden Ansprüche,
**dadurch gekennzeichnet,**
**dass** die Leuchte ein flächiges Stützelement (24) aufweist, das relativ zu den Leuchteinheiten (58, 60) in einer Ebene schwenkbar ist, die im Wesentlichen parallel zu der ersten und zweiten Abstrahlrichtung (A, A') ausgerichtet ist.

16. Mobile Leuchte nach Anspruch 15,
**dadurch gekennzeichnet,**
**dass** ein Gehäuse (18) vorgesehen ist, in dem die Leuchteinheiten (58, 60) angeordnet sind, und
**dass** an dem Gehäuse (18) und an dem Stützelement (24) zueinander komplementäre Rastelemente (72, 74, 76, 78) angeordnet sind, mittels derer das Stützelement (24) in seiner Relativlage zu dem Gehäuse (18) sicherbar ist.

17. Mobile Leuchte nach einem der vorhergehenden Ansprüche, **gekennzeichnet durch**
ein Gehäuse (18) zur Aufnahme der Leuchteinheiten (58, 60), und zwei an sich gegenüberliegenden Seiten des Gehäuses (18) angeordnete, mit dem Gehäuse (18) verbundene Laschen (86, 86'), an denen ein elastisches Band (10) zur Befestigung der Leuchte an einem Gegenstand oder einem Kopf einer Person haltbar ist und die so flexibel sind, dass deren Form bei Befestigung an dem Gegenstand bzw. Kopf **durch** die Spannung des elastischen Bandes (10) an die Form des Gegenstands bzw. Kopfes anpassbar ist.

18. Mobile Leuchte nach einem der vorhergehenden Ansprüche,
**dadurch gekennzeichnet,**
**dass** die Leuchteinheiten in einem Gehäuse angeordnet sind, in dem ein Batteriefach vorgesehen ist.

19. Mobile Leuchte nach einem der vorhergehenden Ansprüche,
**dadurch gekennzeichnet,**
**dass** die Leuchteinheiten (58, 60) in einem Gehäuse (18) an einem elastischen Band (10) gehalten sind, und
**dass** an dem Band (10) ein Batteriebehälter (14) gehalten ist.
